# EUROPÄISCHE PATENTANMELDUNG

(11) **EP 0 545 087 A1**
(43) Veröffentlichungstag der Anmeldung: **09.06.1993**
(21) Anmeldenummer: 92118857.9
(22) Anmeldetag: 04.11.1992
(51) Int. Cl.: H02K 17/08, H02P 7/622

(54) **Mehrtouriger Einphasenmotor**

(30) Priorität: 29.11.1991 DE 4139298
(71) Anmelder: ROSENBERG-VENTILATOREN GmbH, D-74653 Künzelsau (DE)
(72) Erfinder: Maurer, Kurt, W-7118 Künzelsau-Gaisbach (DE)
(74) Vertreter: Geitz, Heinrich, Dr.-Ing.

(57) **Zusammenfassung**

Bei einem mehrtourigen Einphasenmotor ist die Arbeitswicklung (12) in mehrere Teilspulen (15,16,17) aufgeteilt, deren Anzahl zumindest gleich der Anzahl der Drehzahlstufen ist und für die größte Drehzahlstufe ist wenigstens eine Teilspule (15) mit zumindest einer anderen Teilspule bzw. einer Gruppe aus in Reihe geschalteten Teilspulen (16,17) parallel zueinander in der Weise schaltbar, daß in der größten Leistungsstufe sämtliche Teilspulen (15,16,17) am Netz liegen. Im einfachsten Falle eines zweitourigen Einphasenmotors besteht dessen Arbeitswicklung aus wenigstens zwei Teilspulen, die wahlweise für die kleine Drehzahlstufe in Reihe und für die große Drehzahlstufe parallel zueinander schaltbar sind.

## Beschreibung

Die Erfindung bezieht sich auf einen mehrtourigen Einphasenmotor mit einer Arbeitswicklung, einer zu der Arbeitswicklung parallelgeschalteten Hilfswicklung und mit einem in Reihe zur Hilfswicklung liegenden Kondensator. Insbesondere bezieht sich die Erfindung auf einen als Außenläufermotor ausgebildeten Einphasenmotor für den Antrieb eines Ventilators.

Mehrtourige Einphasenmotoren sind bereits bekannt und auch schon als Antriebsmotoren für Ventilatoren verwendet worden. Derartige Motoren haben eine mit Anzapfungen versehene Arbeitswicklung und in einem dazu parallelen Zweig eine Anlaßhilfe in Form einer Hilfswicklung und einer zu dieser Hilfswicklung in Reihe geschalteten Kapazität.

Unbefriedigend bei derartigen Einphasenmotoren ist, daß in der höchsten Drehzahlstufe nur ein kleiner Teil der Arbeitswicklung und damit des eingesetzten Kupfers genutzt wird. Demzufolge sind die Strombelastung und mithin auch die thermische Beanspruchung in dem in der größten Drehzahlstufe beaufschlagten Teil der Arbeitswicklung groß.

Bei einem bekanntgewordenen dreitourigen Einphasenmotor, der druckschriftlich nicht belegbar ist, liegt lediglich in der kleinsten Leistungsstufe die gesamte Arbeitswicklung am Netz, in der mittleren Leistungsstufe hingegen nur zu 70 % und in der größten Drehzahlstufe lediglich zu 40 %. Es ist ersichtlich, daß ein eintouriger Einphasenmotor, bei dem die gesamte Arbeitswicklung am Netz liegt, angesichts des dann im Einsatz befindlichen höheren Kupferanteils eine höhere Leistung abzugeben vermag als ein mehrtouriger Einphasenmotor mit Wicklungsanzapfungen, bei dem in der höchsten Drehzahlstufe nur ein Teil der Arbeitswicklung und mithin auch nur ein Teil der in der Arbeitswicklung installierten Kupferwindungen genutzt wird.

Angesichts dieser Unzulänglichkeit der mehrtourigen Einphasenmotoren sind, wenn mehrere Drehzahlstufen gefordert werden, auch schon eintourige Motoren mit Steuergeräten verwendet worden. Derartige Antriebe mit Steuergerät sind jedoch merklich kostenaufwendiger als mehrtourige Motoren mit Wicklungsanzapfungen.

Die der Erfindung zugrundeliegende Aufgabe besteht daher in der Schaffung eines verbesserten mehrtourigen Einphasenmotors, bei dem zumindest in der größten Drehzahlstufe ein wesentlich größerer Kupferanteil der Arbeitswicklung als bei den bekannten Motoren mit Wicklungsanzapfungen genutzt wird.

Gelöst ist diese Aufgabe erfindungsgemäß dadurch, daß bei dem mehrtourigen Einphasenmotor nach dem Oberbegriff des Patentanspruchs 1 die Arbeitswicklung aus mehreren Teilspulen besteht, deren Anzahl zumindest gleich der Anzahl der Drehzahlstufen ist, und daß für die größte Drehzahlstufe wenigstens eine Teilspule mit zumindest einer anderen Teilspule bzw. wenigstens einer Gruppe aus in Reihe geschalteten Teilspulen parallel zueinander schaltbar ist, derart, daß in der größten Leistungsstufe sämtliche Teilspulen am Netz liegen.

Im Unterschied zum Stande der Technik ist bei dem Motor nach der Erfindung die Arbeitswicklung nicht mit Anzapfungen ausgerüstet, sondern aus mehreren Teilspulen aufgebaut, die jeweils mit Anfang und Ende ausgeführt und in unterschiedlicher Weise schaltbar sind. Während beim Stande der Technik in der größten Drehzahlstufe nur ein kleiner Teil des Kupfers der Arbeitswicklung genutzt wird, liegen bei der Erfindung in der größten Drehzahlstufe sämtliche Teilspulen am Netz mit der Folge, daß eine Nutzung des gesamten Kupfers der Arbeitswicklung erfolgt und mithin die Strombelastung und die thermische Beanspruchung sich in Grenzen halten.

Für mehrtourige Motoren nach dem Stande der Technik ist kennzeichnend, daß in der kleinsten Leistungsstufe die gesamte Arbeitswicklung am Netz liegt. Dies ist auch bei dem erfindungsgemäßen Motor der Fall, indem in der kleinsten Leistungsstufe sämtliche Teilspulen in Reihe geschaltet sind. Die mittleren Leistungsstufen sind bei der Erfindung hingegen realisierbar, indem wenigstens zwei Teilspulen in Reihe und gegebenenfalls diese Reihenanordnung in Parallellage zu einer anderen Teilspule oder einer weiteren Reihenanordnung aus mehreren anderen Teilspulen geschaltet werden.

Als zweckmäßig hat sich dabei erwiesen, wenn gemäß einer Weiterbildung unter der Voraussetzung gleicher Drahtdurchmesser in allen Teilspulen die Zahl der Windungen der jeweils in einem parallel geschalteten Zweig liegenden Teilspulen gleich ist.

Im einfachsten Falle eines zweitourigen Einphasenmotors besteht dessen Arbeitswicklung erfindungsgemäß aus wenigstens zwei Teilspulen, die wahlweise für die kleine Drehzahlstufe in Reihe und für die große Drehzahlstufe parallel zueinander schaltbar sind. Dabei hat sich als zweckmäßig erwiesen, wenn die beiden Teilspulen untereinander gleich ausgebildet sind und somit bei Verwendung gleicher Drahtstärken gleiche Windungszahlen aufweisen.

Eine andere Ausgestaltung der Erfindung ist durch die Ausbildung als dreitouriger Motor mit einer Arbeitsspule aus drei Teilspulen gekennzeichnet, von denen die eine Teilspule einen Kupferanteil an der gesamten Arbeitswicklung gleich dem gemeinsamen Kupferanteil der beiden anderen Teilspulen besitzt und für die größte Drehzahlstufe in Parallellage mit den beiden anderen dann in Serie geschalteten Teilspulen schaltbar ist, während für die mittlere Drehzahlstufe die eine der beiden Teilspulen mit kleinerem Kupferanteil abschaltbar ist und die beiden verbleibenden Teilspulen in Reihe, hingegen für die kleinste Drehzahlstufe sämtliche Teilspulen in Serie schaltbar sind.

In Übereinstimmung mit dem Grundgedanken der Erfindung liegen in der größten Drehzahlstufe auch bei dieser Ausführungsform sämtliche Teilspulen am Netz und mithin findet in dieser Leistungsstufe eine Nutzung des gesamten Kupferanteils der Arbeitswicklung statt.

Eine zweckmäßige Weiterbildung der zuletztgenannten Ausgestaltung sieht vor, daß neben der Teilspule mit dem halben Kupferanteil der gesamten Arbeitswicklung deren verbleibender Kupferanteil auf die beiden anderen Teilspulen etwa im Verhältnis 35 % zu 15 % aufgeteilt ist. Diese Maßnahme ermöglicht unter Ausschaltung einer der beiden Teilspulen mit dem kleineren Kupferanteil eine Reihenschaltung einer der letztgenannten Teilspulen mit der 50 % des gesamten Kupferanteils aufweisenden Teilspule, so daß in der mittleren Drehzahlstufe dann ein Kupferanteil von mindestens 65 % der Arbeitswicklung genutzt wird.

Eine nochmalige Ausgestaltung der Erfindung ist durch die Ausbildung als n-touriger Motor mit einer Arbeitswicklung aus n Teilspulen gekennzeichnet, von denen eine Teilspule den gleichen Kupferanteil wie jeweils eine von zwei Gruppen von Teilspulen besitzt und für die größte Drehzahlstufe mit den ihrerseits parallel schaltbaren Teilspulengruppen parallel schaltbar ist.

Bei den zuletztgenannten Ausgestaltungen und deren Weiterbildungen können mit Vorteil die Windungen aller Teilspulen gleiche Drahtstärken aufweisen und unter der Voraussetzung gleicher Windungsdurchmesser sind dann die Windungszahlen der Teilspulen verhältnisgleich zu deren Kupferanteilen an der gesamten Arbeitswicklung.

Anhand der beigefügten Zeichnung sollen nachstehend der Wicklungsaufbau eines Einphasenmotors schlechthin und für einen dreitourigen Einphasenmotor die Aufteilung der Arbeitswicklung in drei Teilwicklungen sowie deren Schaltung in den einzelnen Drehzahlstufen erläutert werden. In schematischen Ansichten zeigen:
- Fig. 1: in einem Schaltplan den grundsätzlichen Wicklungsaufbau eines Einphasenmotors mit Anlaßhilfe,
- Fig. 2: die Aufteilung der Arbeitswicklung in drei jeweils mit Anfang und Ende ausgeführten Teilspulen,
- Fig. 3: in einem Schaltplan wie in Fig. 1 die Schaltung der Teilspulen der Arbeitswicklung für die größte Drehzahlstufe,
- Fig. 4: für die mittlere Drehzahlstufe die Schaltung von zwei Teilspulen der Arbeitswicklung in Reihe und
- Fig. 5: für die kleinste Drehzahlstufe die Schaltung sämtlicher Teilspulen der Arbeitswicklung in Serie,
- Fig. 6: in einem Schaltplan wie in Fig. 3 die Schaltung der Teilspulen der Arbeitswicklung für die größte Drehzahlstufe bei einem n-tourigen Einphasenmotor.

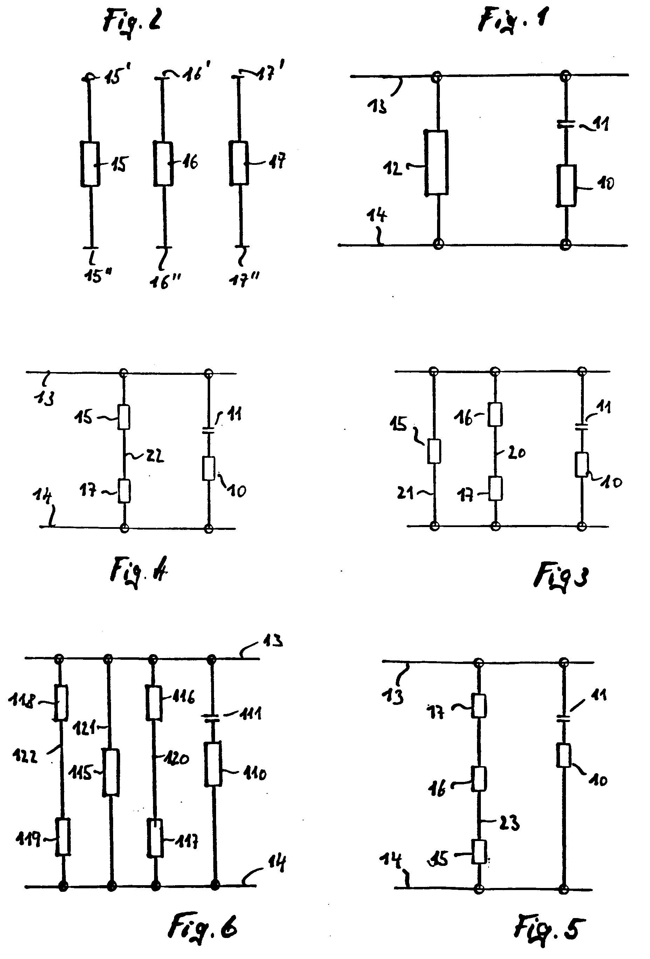

Bei einem Einphasenmotor mit dem grundsätzlichen Wicklungsaufbau gemäß Fig. 1 ist die Anlaßhilfe, die aus einer Hilfswicklung 10 und einem in Serie dazu liegenden Kondensator 11 besteht, parallel zu einer Arbeitswicklung 12 geschaltet, die an den Leitern 13, 14 eines Versorgungsnetzes anliegt.

Gemäß Fig. 2 ist bei der dreitourigen Ausführungsform des erfindungsgemäßen Einphasenmotors die Arbeitswicklung 12 in drei Teilspulen 15, 16, 17 mit jeweils einem Spulenanfang 15', 16', 17' und einem Spulenende 15'', 16'', 17'' ausgeführt. Alle Teilspulen bestehen aus Kupferdrähten gleicher Drahtstärke. Die Windungszahl der Teilspule 15 ist gleich der Summe der Windungszahlen der beiden anderen Teilspulen 16, 17 und beträgt 50 % der Windungszahl der Arbeitswicklung insgesamt, hingegen 35 % bei der Teilspule 16 und 15 % bei der Teilspule 17. Unter der Voraussetzung gleicher Drahtstärken und gleicher Windungsdurchmesser betragen mithin, bezogen auf die Arbeitswicklung insgesamt, die Kupferanteile 50 % bei der Teilspule 15, hingegen 35 % bei der Teilspule 16 und 15 % bei der Teilspule 17.

Bei der in Fig. 3 veranschaulichten Schaltung für die größte Drehzahlstufe sind die beiden mit dem geringeren Kupferanteil ausgestatteten Teilspulen 16, 17 in einem Zweig 20 in Reihe geschaltet und parallel dazu liegt in einem Zweig 21 die mit dem halben Kupferanteil der gesamten Arbeitswicklung ausgestattete Teilspule 15. Die aus den so geschalteten Teilspulen bestehende Arbeitswicklung liegt dann, analog zu dem Schaltbild gemäß Fig. 1, parallel zu der aus der Hilfswicklung 10 und einem dazu in Reihe geschalteten Kondensator 11 bestehenden Anlaßhilfe. Es ist ersichtlich, daß angesichts dieser Schaltung in der größten Drehzahlstufe sämtliche Teilspulen am Netz liegen und mithin der gesamte Kupferanteil der Arbeitswicklung genutzt wird.

Bei der die mittlere Drehzahlstufe charakterisierenden Schaltung gemäß Fig. 4 liegen die Teilspulen 15, 17 in Reihe und diese Reihenschaltung in einem Parallelzweig 22 zu der aus der Hilfswicklung 10 und dem dazu in Reihe geschalteten Kondensator 11 bestehenden Anlaßhilfe. In dieser Drehzahlstufe ist die Teilspule 16 mit einem Kupferanteil von 35 % der gesamten Arbeitswicklung abgeschaltet und mithin befinden sich 65 % des Kupferanteils im Einsatz. Dies entspricht etwa der Nutzung des Kupferanteils bei herkömmlichen dreitourigen Einphasenmotoren mit Wicklungsanzapfungen.

Bei der die kleinste Leistungsstufe charakterisierenden Schaltung gemäß Fig. 5 liegen sämtliche Teilspulen 15, 16, 17 der Arbeitswicklung 12 in Serie und diese Reihenanordnung befindet sich in einem Parallelzweig 23 zu der Anlaßhilfe aus der Hilfswicklung 10 und dem dazu in Reihe geschalteten Kondensator 11. Ebenso wie bei herkömmlichen Einphasenmotoren mit Wicklungsanzapfungen befindet sich der gesamte Kupferanteil der Arbeitswicklung im Einsatz.

Bei der in Fig. 6 veranschaulichten Schaltung für die größte Drehzahlstufe eines n-tourigen Motors ist die Arbeitswicklung 12 in insgesamt fünf Teilspulen 115, 116, 117, 118, 119 aufgeteilt. Der Kupferanteil der Teilspule 115 beträgt 33 1/3 %, hingegen 20 1/3 % bei der Teilspule 116 und 13 % bei der Teilspule 117, während die Teilspule 118 einen Kupferanteil von 10% und die Teilspule 119 von 23 1/3 % aufweisen. Alle Teilspulen bestehen aus Kupferdrähten gleicher Drahtstärke. Die Windungszahlen entsprechen unter der Voraussetzung gleicher Windungsdurchmesser, bezogen auf die Arbeitswicklung insgesamt, den Kupferanteilen der einzelnen Teilspulen.

Bei dem die größte Drehzahlstufe darstellenden Schaltbild nach Fig. 6 liegt die Teilspule 115 mit dem größten Kupferanteil in einem Parallelzweig 121 zu der die Anlaßhilfe bildenden Serienschaltung aus der Hilfswicklung 110 und dem Kondensator 111 und ist ferner parallel geschaltet zu den Zweigen 120 und 122, in denen jeweils die beiden Teilspulen 116 und 117 bzw. 118 und 119 in Serie zueinander geschaltet sind. Es ist ersichtlich, daß in der durch die Schaltung gemaß Fig. 6 veranschaulichten größten Drehzahlstufe sämtliche Teilspulen und mithin der gesamte Kupferanteil der Arbeitswicklung insgesamt im Einsatz sind. Bei dieser Schaltung ist die Gesamtzahl der Windungen in jedem der Parallelzweige 120, 121 und 122 gleich unter der Voraussetzung, daß gleiche Drahtstärken bei allen Teilspulen eingesetzt sind.

In gleicher Weise, wie oben in Verbindung mit den Fig. 3 bis 5 gezeigt, können bei der n-tourigen Ausbildung gemäß Fig. 6 mehrere Zwischenstufen bis hin zur kleinsten Leistungsstufe geschaltet werden, in der sämtliche Teilspulen in Serie und diese Serienanordnung in Parallelschaltung zur Anlaßhilfe liegen. Bei der Verschaltung der zweiten und jeder folgenden Stufe ist darauf zu achten, daß der gesamte ohmsche Widerstand der eingesetzten Teilspulen größer ist als in der jeweils vorhergehenden Stufe.

## Patentansprüche

1. Mehrtouriger Einphasenmotor mit einer Arbeitswicklung, einer zu der Arbeitswicklung parallel geschalteten Hilfswicklung und mit einem in Reihe zur Hilfswicklung liegenden Kondensator, insbesondere als Außenläufermotor ausgebildeter Einphasenmotor für den Antrieb eines Ventilators, dadurch gekennzeichnet,
daß die Arbeitswicklung (12) aus mehreren Teilspulen (15, 16, 17, 115, 116, 117, 118, 119) besteht, deren Anzahl zumindest gleich der Anzahl der Drehzahlstufen ist, und daß für die größte Drehzahlstufe wenigstens eine Teilspule (15, 115) mit zumindest einer anderen Teilspule bzw. wenigstens einer Gruppe aus in Reihe geschalteten Teilspulen (16, 17 bzw. 116, 117 und 118, 119) parallel zueinander schaltbar ist, derart, daß in der größten Leistungsstufe sämtliche Teilspulen am Netz liegen.

2. Einphasenmotor nach Anspruch 1, dadurch gekennzeichnet, daß unter der Voraussetzung gleicher Drahtdurchmesser in allen Teilspulen (15, 16, 17; 115, 116, 117, 118, 119) die Zahl der Windungen der jeweils in einem parallel geschalteten Zweig (20, 21; 120, 121, 122) liegenden Teilspulen gleich ist,

3. Einphasenmotor nach Anspruch 1 oder 2, gekennzeichnet durch die Ausbildung als zweitouriger Motor mit einer Arbeitswicklung, die aus wenigstens zwei für die kleine Drehzahlstufe in Reihe und für die große Drehzahlstufe parallel zueinander schaltbaren Teilspulen besteht.

4. Einphasenmotor nach Anspruch 3, dadurch gekennzeichnet, daß die beiden Teilspulen untereinander gleich ausgebildet sind und somit bei Verwendung gleicher Drahtstärken gleiche Windungszahlen aufweisen.

5. Einphasenmotor nach Anspruch 1 oder 2, gekennzeichnet durch die Ausbildung als dreitouriger Motor mit einer Arbeitswicklung (12) aus drei Teilspulen (15, 16, 17), von denen die eine Teilspule (15) einen Kupferanteil an der gesamten Arbeitswicklung gleich dem gemeinsamen Kupferanteil der beiden anderen Teilspulen (16, 17) besitzt und für die größte Drehzahlspule in Prallellage mit den beiden anderen dann in Serie geschalteten Teilspulen (16, 17) schaltbar ist, während für die mittlere Drehzahlstufe die eine der beiden Teilspulen mit kleinerem Kupferanteil abschaltbar ist und die beiden verbleibenden Teilspulen (15, 17) in Reihe, hingegen für die kleinste Drehzahlstufe sämtliche Teilspulen in Serie schaltbar sind.

6. Einphasenmotor nach Anspruch 5, dadurch gekennzeichnet, daß neben der Teilspule (15) mit dem halben Kupferanteil der gesamten Arbeitswicklung (12) deren verbleibender Kupferanteil auf die beiden anderen Teilspulen (16, 17) etwa im Verhältnis 35 % zu 15 % aufgeteilt ist.

7. Einphasenmotor nach Anspruch 1, gekennzeichnet durch die Ausbildung als n-touriger Motor mit einer Arbeitswicklung aus n Teilspulen (115, 116, 117, 118, 119), von denen eine Teilspule (115) den gleichen Kupferanteil wie jeweils eine von zwei Gruppen von Teilspulen (116, 117 und 118, 119) besitzt und für die größte Drehzahlstufe mit den ihrerseits parallel geschalteten Teilspulengruppen (116, 117 und 118, 119) parallel schaltbar ist.

8. Einphasenmotor nach einem der Ansprüche 5 bis 7, dadurch gekennzeichnet, daß die Windungen aller Teilspulen (15, 16, 17) gleiche Drahtstärken aufweisen und daß unter der Voraussetzung gleicher Windungsdurchmesser die Windungszahlen der Teilspulen verhältnisgleich zu deren Kupferanteilen an der gesamten Arbeitswicklung sind.
